# EUROPÄISCHE PATENTSCHRIFT

(11) **EP 1 354 742 B1**
(45) Veröffentlichungstag und Bekanntmachung des Hinweises auf die Patenterteilung: **03.09.2008**
(21) Anmeldenummer: 03005997.6
(22) Anmeldetag: 18.03.2003
(51) Int. Cl.: B60J 7/12

(54) **Kraftfahrzeug mit einem öffnungsfähigen Verdeck**
Motor vehicle with an openable soft top
Automobile avec une capote ouvrante

(30) Priorität: 17.04.2002 DE 10216893
(43) Veröffentlichungstag der Anmeldung: 22.10.2003
(73) Patentinhaber: Dr. Ing. h.c. F. Porsche Aktiengesellschaft, 70435 Stuttgart (DE)
(72) Erfinder: Pfertner, Kurt, 71254 Ditzingen (DE); Fischer, Thomas, Sylvan Lake, MI 48320 (US)

(56) Entgegenhaltungen:
- EP-A- 1 164 041
- EP-A- 1 184 218
- DE-A- 19 912 358
- DE-C- 4 441 666

## Beschreibung

Bei der Erfindung wird ausgegangen von einem Kraftfahrzeug, insbesondere Personenwagen, mit einem Verdeck, gemäß Oberbegriff des Anspruchs 1.

Ein gattungsbildendes Kraftfahrzeug ist aus der DE 44 41 666 C1 bekannt. Es umfasst ein Verdeck, welches aus einer den Fahrgastraum des Kraftfahrzeugs überspannenden Schließstellung in eine heckseitige Ablagestellung überführbar ist. Das Verdeck besitzt ein Verdeckgestänge, das neben anderen Gestängeteilen einen U - förmigen Spannbügel aufweist, der in Schließstellung des Verdecks in eine etwa horizontale Spannstellung oder in eine nach oben geklappte, beispielsweise aufrechte Montagestellung bewegbar ist. Weiterhin ist dem Verdeck ein Verdeckbezug zugeordnet, der an dem Verdeckgestänge in Lage gehalten ist und eine formsteife Heckscheibe aufweist. Die Montagestellung kann auch als Servicestellung bezeichnet werden und dient insbesondere für die Zugänglichkeit zu einem unter dem Spannbügel liegenden Aufnahmeraum oder für Wartungs- und/oder Reparaturarbeiten am Verdeck. Insbesondere für Kraftfahrzeuge mit Mittelmotoranordnung hat sich der in Montagestellung bringbare Spannbügel bewährt, um eine Zugänglichkeit zu dem Antriebsmotor zu erhalten, auch wenn die übrigen Verdeckteile die Schließstellung einnehmen.

Es ist Aufgabe der Erfindung, ein Kraftfahrzeug der eingangs genannten Art zu schaffen, bei dem in Schließstellung des Verdecks der Spannbügel problemlos in die Montagestellung überführt werden kann, ohne dass dabei die formsteife Heckscheibe die Montagestellung behindert.

Gelöst wird diese Aufgabe mit einem Kraftfahrzeugs, welches die in Anspruch 1 genannten Merkmale umfasst. Weitere, die Erfindung ausgestaltende Merkmale sind in den Unteransprüchen angegeben.

Die mit der Erfindung hauptsächlich erzielten Vorteile sind darin zu sehen, das durch die lösbare Verbindungseinrichtung der Spannbügel von der Schwenkachse entkoppelt werden kann, so dass er in die gewünschte Montagestellung nach oben, d. h. aus seiner horizontalen Spannstellung entgegen der Fahrtrichtung verschwenkt werden kann, ohne dass die Heckscheibe den Schwenkweg stört. Somit kann auf einfache Weise die Zugänglichkeit zu dem heckseitigen Aufnahmeraum geschaffen werden, wenn der Spannbügel in die Montagestellung überführt ist. In Montagestellung des Spannbügels sind jedoch auch innenliegende Verdeckteile beispielsweise für Einstellarbeiten zugänglich, so dass der erfindungsgemäße Spannbügel nicht nur bei Kraftfahrzeugen mit Mittelmotoranordnung Verwendung finden kann.

Gemäß einem Ausführungsbeispiel nach Anspruch 2 ist jeder Schenkel des U - förmigen Spannbügels zweiteilig ausgeführt. Beide Schenkelteile jedes Schenkels sind mithin über die Verbindungseinrichtung aneinander befestigt und können über die Verbindungseinrichtung auch voneinander gelöst werden, damit der Spannbügel in die Montagestellung überführbar ist.

Bevorzugt wird eine Verbindungseinrichtung, bei der die beiden Teile des Schenkels nicht vollständig voneinander gelöst werden, jedoch eine Relativbewegung dieser beiden Schenkelteile zueinander gegeben ist. Gemäß Anspruchs 3 kann dies auf einfache und günstige Weise durch eine zusätzlich zur Schwenkachse vorgesehene Klappachse erreicht werden, die mit Abstand und etwa parallel zur Schwenkachse verläuft. Um diese Klappachse wird der Spannbügel in die Montagestellung gebracht. Wie in Anspruch 8 angegeben, wird die Klappachse vorzugsweise oberhalb der Schwenkachse angeordnet.

Nach einem anderen Ausführungsbeispiel kann jedoch die Verbindungseinrichtung als trennbare oder ausziehbare Steckkupplung ausgebildet sein, die an einem der Schenkelteile eines Schenkels eine Steckelementaufnahme und an dem anderen Schenkelteil desselben Schenkels ein Steckelement aufweist, welches bei geschlossener Verbindungseinrichtung in der Steckelementaufnahme vorliegt. Bei getrennter Steckkupplung wird der Spannbügel verlängert, so dass er über die formsteife Heckscheibe hinweg um die Schwenkachse in Monatgestellung bewegbar ist.

Bei einer anderen in Anspruch 5 enthaltenen Ausführungsvariante kann der Spannbügel in Montagestellung dadurch verlagert werden, dass jedes Schenkelende ein in Richtung der Mittellängsachse des Schenkels ausgerichtetes Langloch aufweist, in das die Schwenkachse eingreift. Mithin wird auch bei dieser Ausführungsvariante eine Verlängerung der Schenkel erreicht. Um eine sichere Funktion des Verdecks zu gewährleisten, ist weiterhin nach Anspruch 5 vorgesehen, den Spannbügel mit der Verbindungseinrichtung in einer gegenüber der Schwenkachse vorgegebenen ersten Schiebeposition zu fixieren bzw. arretieren, wobei diese erste Schiebeposition der Spannstellung des Spannbügels zugeordnet ist. Bei gelöster Verbindungseinrichtung wird der Spannbügel entlag des Langlochs in die zweite Schiebeposition verlagert, welche der Montagestellung des Spannbügels zugeordnet ist. In der zweiten Schiebeposition liegt die Basis des U - förmigen Spannbügels mit größerem Abstand zur Schwenkachse, so dass beim Überführen des Spannbügels in Montagestellung die formsteife Heckscheibe nicht im Schwenkweg des Spannbügels liegt.

Weitere Ausgestaltungen ergeben sich aus den übrigen Unteransprüchen.

Die Erfindung wird nachfolgend anhand von Ausführungsbeispielen mit Bezug auf die Zeichnung näher erläutert.

Es zeigen:
- Fig. 1: ausschnittweise ein Kraftfahrzeug mit einem Verdeck,
- Fig. 2: das Verdeck in Detaildarstellung und
- Fig. 3 bis 6: jeweils ein Ausführungsbeispiel eines Spannbügels.

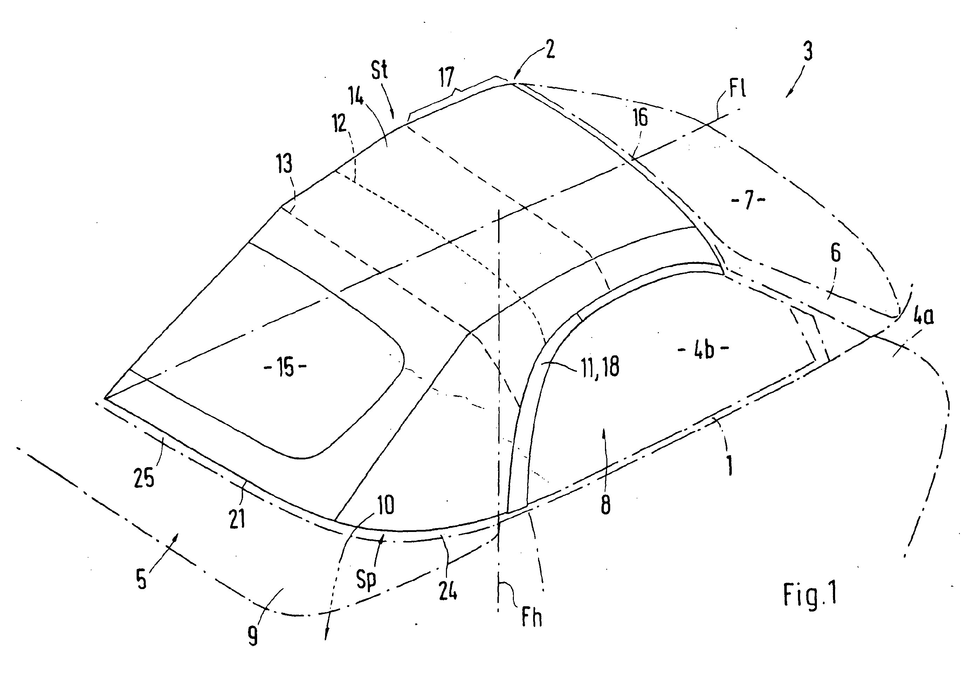

Fig. 1 zeigt ausschnittweise oberhalb einer Gürtellinie 1 des Fahrzeugaufbaus ein Verdeck 2 eines Kraftfahrzeugs 3, insbesondere Personenwagen, das zu seiner Mittellängsebene symmetrisch ist. Das Kraftfahrzeug 3 ist vorzugsweise als Cabriolet mit dem Verdeck 2 aufgebaut. Der Fahrzeugaufbau besitzt ferner unterhalb der Gürtellinie 1 je Fahrzeugseite eine Seitentür 4a mit Seitenscheibe 4b und zusätzlich zu einem hier nicht dargestellten Frontbereich einen Heckbereich 5. Außerdem ist dem Aufbau eine in einem Windschutzscheibenrahmen 6 angeordnete Windschutzscheibe 7 zugeordnet. Das Verdeck 2 überspannt in der in Fig. 1 gezeigten Schließstellung St den Fahrgastraum 8 des Kraftfahrzeugs 3. Ferner kann das Verdeck 2 in eine hier nicht dargestellte Ablagestellung überführt werden, in der es im Heckbereich 5 in einem unterhalb eines heckseitigen Verdeckkastendeckels 9 liegenden Verdeckablagekasten verstaut wird. Bei dem Kraftfahrzeug 3 handelt es sich in bevorzugter Ausführungsform um einen zweisitzigen Sportwagen, bei dem in Mittelmotoranordnung die Antriebsmaschine in einem Aufnahmeraum 10 angeordnet sein kann, der insbesondere unterhalb des Verdeckablagekastens und hinter dem Fahrgastraum 8 angeordnet ist.

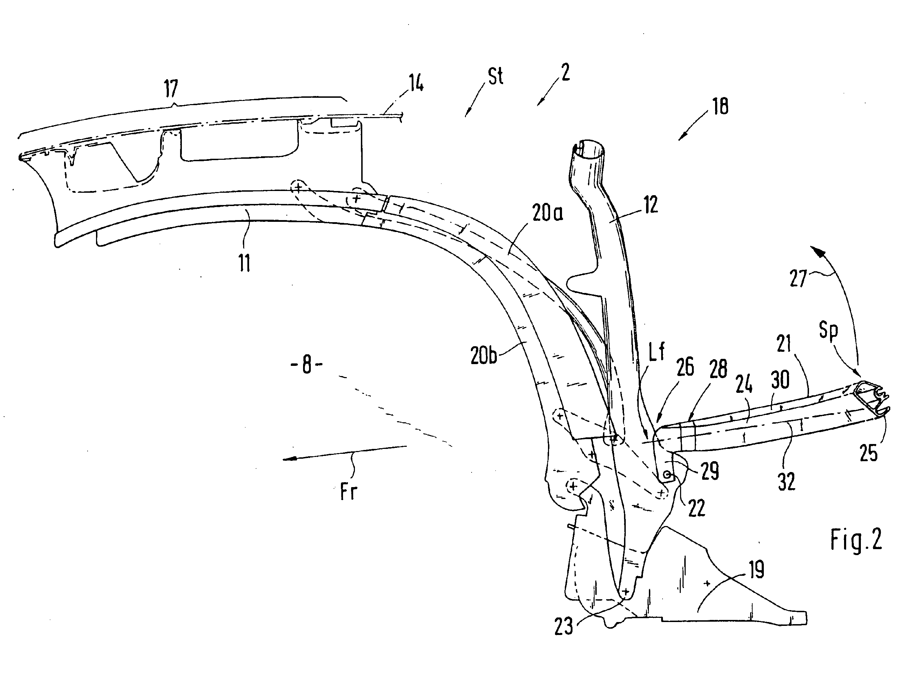

Das Verdeck 2 umfasst ein am Fahrzeugaufbau angelenktes Verdeckgestänge 18 (Fig. 2), von dem in Fig. 1 ein seitlicher Dachrahmen 11 zu sehen ist. Das Verdeckgestänge 18 besitzt ferner zumindest einen hier gestrichelt angedeuteten querverlaufenden Spriegel 12 und/oder 13, wobei der vordere Spriegel 12 insbesondere den Hauptspriegel und der hintere Spriegel 13 den Eckspriegel bilden kann. Am Verdeckgestänge 18 in Lage gehalten ist überdies ein Verdeckbezug 14, in den eine formsteife Heckscheibe 15 eingesetzt und vorzugsweise ausschließlich mit dem Verdeckbezug 14 verbunden ist. Das Verdeck 2 erstreckt sich in Schließstellung St vom Heckbereich 5 bis zum Rahmenquerteil 16 des Windschutzscheibenrahmens 6. Insbesondere der zum Rahmenquerteil 16 benachbart liegende vordere Verdeckabschnitt 17 ist als von dem Verdeckbezug 14 abgedeckte formsteife Schale ausgebildet.

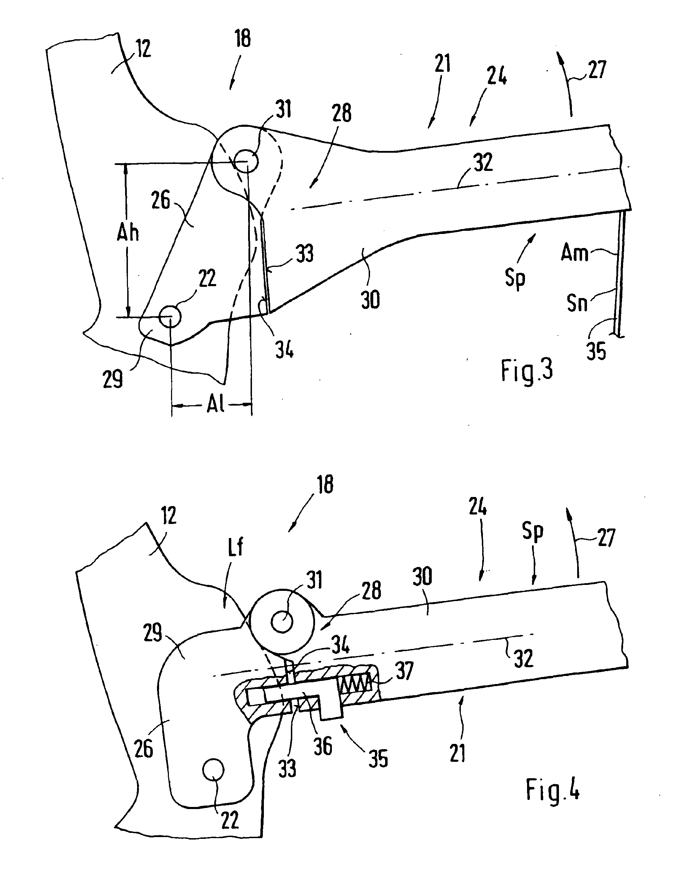

In Fig. 2 ist das Verdeck 2 mit seinem Verdeckgestänge 18 detailliert widergegeben. Gleiche Teile wie in Fig. 1 sind mit denselben Bezugszeichen versehen. Das Verdeckgestänge 18 ist an einem mit dem Fahrzeugaufbau verbundenen Verdecklager 19 bewegbar abgelenkt, um es aus der Schließstellung St in die heckseitige Ablagestellung verlagern zu können. Das Verdeckgestänge 18 weist hier neben dem seitlichen Dachrahmen 11 noch ein seitliches Lenkerpaar 20a, 20b auf, das ein Gelenkviereck bilden kann. Beide Lenker 20a, 20b sind mit ihrem einen Ende am Dachrahmen 11, insbesondere im Bereich des Abschnitts 17, und mit ihrem anderen Ende am Verdecklager 19 oder an anderen Teilen des Verdeckgestänges 18 schwenkbar angelenkt. Der Hauptspriegel 12 ist schwenkbar an dem Verdecklager 19 befestigt. Der in Fig. 2 nicht gezeigte Eckspriegel 13 wird ebenfalls schwenkbar gelagert sein. Ferner ist dem Verdeckgestänge 18 ein heckseitiger Spannbügel 21 zugeordnet, der am Verdeckgestänge 18 oder am Verdecklager 19 um eine Schwenkachse 22 schwenkbar gelagert ist, so dass er die in Fig. 2 dargestellte etwa horizontale Spannstellung Sp einnehmen kann, in der er den Verdeckbezug 14 am Verdeckgestänge 18 gespannt hält. Seine Schwenkachse 22 ist insbesondere an dem Hauptspriegel 12 in dessen unteren Bereich, beispielsweise benachbart zu dessen Anlenkachse 23 am Verdecklager 19, vorgesehen. Der Spannbügel 21 ist - wie insbesondere in Fig. 1 angedeutet - U-förmig gebogen ausgeführt und zu der Fahrzeugmittellängsebene symmetrisch ausgebildet. Demnach weist der Spannbügel 21 zwei Spannbügelschenkel auf, von denen lediglich ein Schenkel 24 sichtbar ist, und er besitzt eine die Schenkel 24 verbindende Spannbügelbasis 25. Am jeweiligen freien Schenkelende 26 ist der Spannbügel 21 um die Schwenkachse 22 schwenkbar gehalten, so dass er aus der Spannstellung Sp der Pfeilrichtung 27 folgend in eine Service- bzw. Montagestellung nach oben, also entgegen der Fahrtrichtung Fr klappbar ist. Damit beim Überführen des Spannbügels 21 aus der Spannstellung Sp in die Montagestellung die Heckscheibe 15 nicht hindert, ist eine den Spannbügel 21 von seiner festen Lagezuordnung zur Schwenkachse 22 entkoppelnde Verbindungseinrichtung 28 vorgesehen, mit der demnach jeder Schenkel 24 des U - förmigen Spannbügels 21 lösbar und wiederverbindbar mit der Schwenkachse 22 verbunden ist. Die Verbindungseinrichtung 28 wird in verschiedenen Ausführungsbeispielen anhand der Fig. 3 bis 6 nachfolgend näher beschrieben.

Aus Fig. 3, 4 und 5 ist ersichtlich, dass der Schenkel 24 des U - förmigen Spannbügels 21 zweiteilig hergestellt ist und somit zwei Schenkelteile 29 und 30 umfasst, die über die Verbindungseinrichtung 28 miteinander verbunden sind. Die Verbindungseinrichtung 28 ist nahe der Schwenkachse 22 vorgesehen, so dass der mit der Schwenkachse 22 verbundene Schenkelteil 29 wesentlich kürzer als der andere Schenkelteil 30 ausgeführt ist.

Die Verbindungseinrichtung 28 nach einem ersten Ausführungsbeispiel ist gemäß Fig. 3 mit einer Klappachse 31 ausgestattet, die parallel zur Schwenkachse 22, jedoch mit Abstand Ah und/oder Al dazu verläuft, welcher Abstand in Richtung der Fahrzeuglängsachse Fl (Abstand Al) und/oder in Richtung der Fahrzeughochachse Fh (Abstand Ah) gemessen ist. Insbesondere ist die Klappachse 31 oberhalb der Schwenkachse 22 und vorzugsweise oberhalb der Mittellängsachse 32 des Schenkels 24 angeordnet, während die Schwenkachse 22 unterhalb dieser Mittellängsachse 32 liegen kann. Unterhalb der Klappachse 31 weist jeder Schenkelteil 29 bzw. 30 einen Sperranschlag 33 bzw. 34 auf, die einander zugewandt liegen und somit lediglich eine Klapprichtung in Pfeilrichtung 27 zulassen und die andere Klapprichtung entgegen Pfeil 27 sperren, wenn der Spannbügel 21 in Spannstellung Sp liegt. Damit der Spannbügel 21 nicht ungewollt in die Montagestellung verlagert wird, ist der Verbindungseinrichtung ein entfernbares Verriegelungselement 35 zugeordnet, welches als Abspannmittel Am mit einem Spannseil Sn realisiert ist und den Spannbügel 21 nach unten, also entgegen Pfeilrichtung 27 beaufschlagt. Das Spannseil Sn ist zwischen dem Spannbügel 21 und beispielsweise dem Aufbau des Kraftfahrzeugs lösbar aufgespannt und zieht beide Sperranschläge 33 und 34 gegeneinander.

Bei der in Fig. 4 dargestellten Verbindungseinrichtung 28 nach einem zweiten Ausführungsbeispiel wird das entfernbare Verriegelungselement 35 von einem bewegbaren Riegel 36 gebildet, der in beide Schenkelteile 29 und 30 eingreift, wenn die Verbindungseinrichtung 28 geschlossen ist. Der Riegel 36 ist beispielsweise parallel zur Mittellängsachse 32 gegen die Kraft einer Feder 37 verlagerbar und wird so aus einem der beiden Schenkelteile 29 und 30 herausgezogen und gibt so die Klappachse 31 nur in Klapprichtung 27 frei. Die Sperranschläge 33 und 34 können wie beim ersten Ausführungsbeispiel vorgesehen sein. Das Schenkelende 26 ist als L - förmiger Fortsatz Lf realisiert.

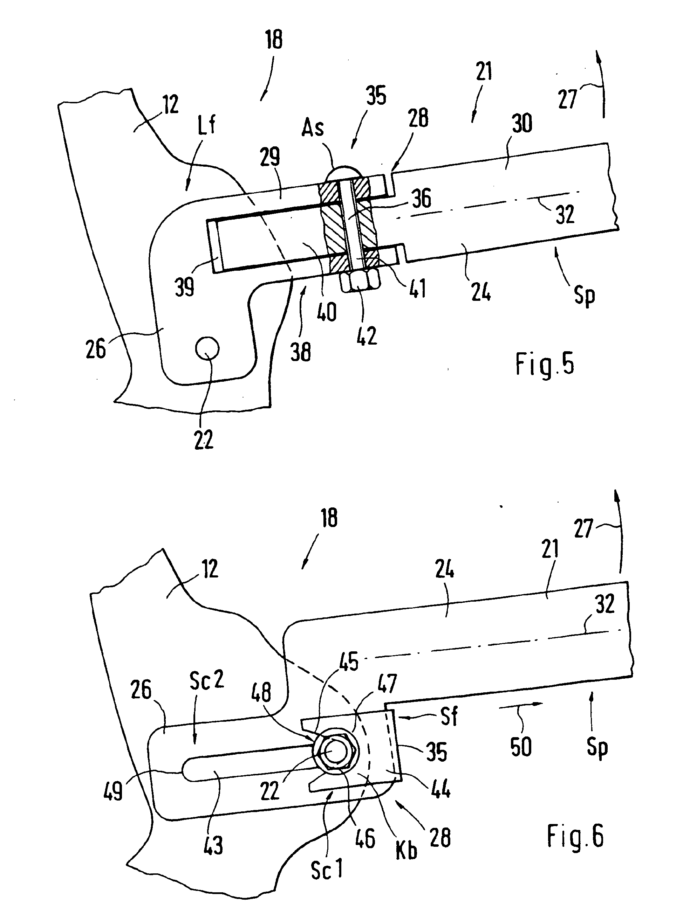

Beim in Fig. 5 gezeigten dritten Ausführungsbeispiel der Verbindungseinrichtung 28 ist anstelle der Klappachse eine Verlängerung des Schenkels 24 möglich. Die Verbindungseinrichtung 28 ist hier als den Schenkel 24 verlängernde oder die Schenkelteile 29 und 30 trennende Steckverbindung 38 ausgeführt, die an dem einen Schenkelteil 29 eine Steckelementaufnahme 39 und an dem anderen Schenkelteil 30 ein Steckelement 40 aufweist. Steckelementaufnahme 39 und Steckelement 40 sind im Wesentlichen parallel zur Mittellängsachse 32 des Schenkels 24 ausgerichtet. Bei geschlossener Steckkupplung 38 sind sowohl die Steckelementaufnahme 39 als auch das Steckelement 40 von dem entfernbaren Verriegelungselement 35 durchgriffen, das hier als Riegel 36 einen Schraub- oder Steckbolzen 41 aufweist, dessen Steckrichtung hauptsächlich quer zur Mittellängsachse 32 verläuft. Der einen Anschlag As aufweisende Steckbolzen 41 kann an seinem anderen Ende ein Außengewinde aufweisen, auf das ein Sicherungselement 42 aufschraubbar ist, so dass der Steckbolzen 41 gegen herausrutschen gesichert werden kann. Werden die beiden Schenkelteile 29 und 30 verlängert, kann der Spannbügel 21 um die Schwenkachse 22 in Montagestellung verbracht werden; sind jedoch beide Schenkelteile 29 und 30 vollständig voneinander getrennt, ist die Schwenkachse 22 ohne Funktion, wenn die Montagestellung eingenommen wird.

In Fig. 6 schließlich ist ein viertes Ausführungsbeispiel einer Verbindungseinrichtung 28 gezeigt. Der Schenkel 24 des U - förmigen Spannbügels 21 kann einteilig ausgeführt sein und er weist an dem freien Ende 26 ein Langloch 43 auf, durch das die Schwenkachse 22 hindurchgreift. Auf das eine Stufe Sf aufweisende Ende 26 ist ein Verriegelungselement 35 auf die Stufe Sf aufgesteckt, das hier als abnehmbare Klammer 44 realisiert ist, die den Schenkel 24 beidseitig und ggf. den Hauptspriegel 12 umgreift.

Die Klammer 44 greift sowohl an der Stufe Sf des Schenkelendes 26 als auch an der Schwenkachse 22 an und besitzt eine Rastausnehmung 45, wodurch sie rastend auf der beispielsweise durch einen Bolzen gebildeten Schwenkachse 22 gehalten ist. Um ein seitliches Herausrutschen der Schwenkachse 22 zu vermeiden, kann ein ringförmiges Sicherungselement 46 auf die Schwenkachse aufgesteckt sein. Zwischen dem Sicherungselement 46 und dem einen der beiden Klammerbügel Kb der Klammer 44 kann zusätzlich eine Scheibe 47 angeordnet werden. Soll der Spannbügel 21 aus seiner in Fig. 6 dargestellten Spannstellung Sp in die Montagestellung 27 verschwenkt werden, wird die Klammer 44 von der Schwenkachse 22 abgenommen oder der Spannbügel 21 nach hinten (Pfeil 50) gezogen, wodurch die Raste der Rastausnehmung 45 überwunden wird. Somit kann der Spannbügel 21 aus seiner in Fig. 6 dargestellten ersten Schiebeposition Sc1 am ersten Ende 48 des Langlochs 43 in Spannstellung Sp in Richtung des Fahrzeugheckbereichs 5 in dem Langloch 43 bis in eine zweite Schiebeposition Sc2 verlagert werden, wobei diese zweite Schiebeposition Sc2 der Montagestellung zugeordnet ist und am zweiten Ende 49 des Langlochs 43 liegt, das parallel zur Mittellängsachse 32 ausgerichtet sein kann. Durch das Verschieben aus der ersten Schiebeposition Sc1 in die zweite Schiebeposition Sc2 wird die Spannbügelbasis 25 in größeren Abstand zur Schwenkachse 22 verbracht bzw. wird die wirksame Länge des Schenkels 24 verlängert, wodurch der Spannbügel 21, ohne von der Heckscheibe 15 gehindert zu sein, in die Montagestellung verlagert werden kann.

## Patentansprüche

1. Kraftfahrzeug, insbesondere Personenwagen, mit einem Verdeck (2), das aus einer den Fahrgastraum (8) des Kraftfahrzeugs überspannenden Schließstellung in eine Ablagestellung überführbar ist und das ein Verdeckgestänge (18) sowie einen am Verdeckgestänge in Lage gehaltenen Verdeckbezug (14) mit einer formsteifen Heckscheibe (15) aufweist, welches Verdeckgestänge wenigstens einen heckseitigen, U - förmigen Spannbügel (21) umfasst, der in Schließstellung des Verdecks in eine etwa horizontale Spannstellung und in eine nach oben geklappte, beispielsweise aufrechte, Montagestellung bewegbar ist und der an seinen freien Bügelenden in einer etwa parallel zur Fahrzeugquerachse verlaufenden Schwenkachse (22) gelagert ist, **dadurch gekennzeichnet, dass** jeder Schenkel (24) des U - förmigen Spannbügels (21) über eine lösbare Verbindungseinrichtung (28) mit der Schwenkachse (22) verbunden ist.

2. Kraftfahrzeug nach Anspruch 1, **dadurch gekennzeichnet, dass** jeder Schenkel (24) des Spannbügels (21) zweiteilig ausgeführt ist und die beiden Schenkelteile (29, 30) mit der Verbindungseinrichtung (28) lösbar aneinander befestigt sind.

3. Kraftfahrzeug nach Anspruch 1 oder 2, **dadurch gekennzeichnet, dass** die Verbindungseinrichtung (28) eine Klappachse (31) aufweist, die mit Abstand (Ah, Al) und etwa parallel zur Schwenkachse (22) verläuft, und dass der Spannbügel (21) um die Klappachse (31) in die Montagestellung bewegbar ist.

4. Kraftfahrzeug nach Anspruch 2, **dadurch gekennzeichnet, dass** die Verbindungseinrichtung (28) als Steckkupplung (38) ausgebildet ist, die an einem Schenkelteil (29, 30) eines Schenkels (24) eine Steckelementaufnahme (39) und an dem anderen Schenkelteil (30, 29) desselben Schenkels (24) ein Steckelement (40) aufweist.

5. Kraftfahrzeug nach Anspruch 1, **dadurch gekennzeichnet, dass** jedes Schenkelende (26) ein in Richtung der Mittellängsachse (32) des Schenkels (24) ausgerichtetes Langloch (43) aufweist, in das die Schwenkachse (22) eingreift, dass der Spannbügel (21) über die Verbindungseinrichtung (28) in einer gegenüber der Schwenkachse (22) vorgegebenen ersten Schiebeposition (Sc1) arretiert ist, welche erste Schiebeposition (Sc1) der Spannstellung (Sp) zugeordnet ist, und dass der Spannbügel (21) bei gelöster Verbindungseinrichtung (28) entlang des Langlochs (43) in eine zweite Schiebeposition (Sc2) verlagerbar ist, welche zweite Schiebeposition (Sc2) der Montagestellung zugeordnet ist und in der die Basis (25) des Spannbügels (21) mit größerem Abstand zur Schwenkachse (22) liegt als in der ersten Schiebeposition (Sc1).

6. Kraftfahrzeug nach Anspruch 5, **dadurch gekennzeichnet, dass** die Verbindungseinrichtung (28) eine abnehmbare Klammer (44) umfasst, die sowohl an dem Schenkelende (26) als auch an der Schwenkachse (22) angreift und den Spannbügel (21) in seiner ersten Schiebeposition (Sc1) relativ zur Schwenkachse (22) hält.

7. Kraftfahrzeug nach Anspruch 2, 3 oder 4, **dadurch gekennzeichnet, dass** die Verbindungseinrichtung (28) ein entfernbares Verriegelungselement (35) besitzt, das die beiden Schenkelteile (29, 30) aneinander hält.

8. Kraftfahrzeug nach Anspruch 3, **dadurch gekennzeichnet, dass** die Klappachse (31) oberhalb der Mittellängsachse (32) der Schenkel (29, 30) des Spannbügels (21) liegt.

9. Kraftfahrzeug nach Anspruch 3 oder 8, **dadurch gekennzeichnet, dass** - ausgehend von in Spannstellung (Sp) vorliegendem Spannbügel (21) - der Spannbügel (21) um die Klappachse (31) lediglich in Richtung (Pfeil 27) in Montagestellung klappbar und die andere, entgegengerichtete Klapprichtung gesperrt ist.

10. Kraftfahrzeug nach Anspruch 9, **dadurch gekennzeichnet, dass** unterhalb der Klappsachse (31) des Schenkels (21) ein Sperranschlag (33, 34) an jedem der Schenkelteile (29, 30) ausgebildet ist und dass in Spannstellung (Sp) des Spannbügels (21) die Sperranschläge (33, 34) aneinander liegen.

11. Kraftfahrzeug nach Anspruch 7, **dadurch gekennzeichnet, dass** das Verriegelungselement (35) einen Riegel (36) besitzt, der in beide Schenkelteile (29, 30) eines Schenkels (24) eingreift.

12. Kraftfahrzeug nach Anspruch 11, **dadurch gekennzeichnet, dass** der Riegel entgegen der Kraft einer Feder (37) in einen der Schenkelteile (29, 30) in Freigabestellung verschiebbar ist.

13. Kraftfahrzeug nach Ansprüche 7 und 10, **dadurch gekennzeichnet, dass** das Verriegelungselement (35) durch ein Abspannmittel (Am), insbesondere Seil (Sn) gebildet ist, das sich zwischen dem Spannbügel (21) und dem Kraftfahrzeug (3) erstreckt, und dass das Abspannmittel (Am) die beiden Sperranschläge (33, 34) gegeneinander zieht.

14. Kraftfahrzeug nach Anspruch 11, **dadurch gekennzeichnet, dass** das Verriegelungselement (35) als Riegel (36) einen Steckbolzen (41) aufweist, der die Steckelementaufnahme (39) und das Steckelement (40) durchgreift.

## Claims

1. Motor vehicle, in particular passenger vehicle, with a folding top (2) which can be transferred from a closed position spanning the passenger compartment (8) of the motor vehicle into a storage position and which has a folding top linkage (18) and a folding top cloth (14), which is held in position on the folding top linkage and has a dimensionally stable rear window (15), which folding top linkage comprises at least one rear, U-shaped tensioning bow (21) which, in the closed position of the folding top, is moveable into an approximately horizontal tensioned position and into an upwardly folded, for example upright, assembly position and which, at its free bow ends, is mounted in a pivot spindle (22) running approximately parallel to the transverse axis of the vehicle, **characterized in that** each limb (24) of the U-shaped tensioning bow (21) is connected to the pivot spindle (22) via a releasable connecting device (28).

2. Motor vehicle according to Claim 1, **characterized in that** each limb (24) of the tensioning bow (21) is designed in two parts, and the two limb parts (29, 30) are fastened releasably to each other by means of the connecting device (28).

3. Motor vehicle according to Claim 1 or 2, **characterized in that** the connecting device (28) has a folding spindle (31) which runs at a distance (Ah, Al) from and approximately parallel to the pivot spindle (22), and **in that** the tensioning bow (21) is moveable about the folding spindle (31) into the assembly position.

4. Motor vehicle according to Claim 2, **characterized in that** the connecting device (28) is designed as a plug-in coupling (38) which has a plug-in element receptacle (39) on one limb part (29, 30) of one limb (24) and a plug-in element (40) on the other limb part (30, 29) of the same limb (24).

5. Motor vehicle according to Claim 1, **characterized in that** each limb end (26) has an elongated hole (43) which is oriented in the direction of the central longitudinal axis (32) of the limb (24) and in which the pivot spindle (22) engages, **in that** the tensioning bow (21) is locked via the connecting device (28) in a predetermined, first sliding position (Sc1) in relation to the pivot spindle (22), which first sliding position (Sc1) is assigned to the tensioned position (Sp), and **in that**, when the connecting device (28) is released, the tensioning bow (21) can be displaced along the elongated hole (43) into a second sliding position (Sc2), which second sliding position (Sc2) is assigned to the assembly position and in which the base (25) of the tensioning bow (21) lies at a greater distance from the pivot spindle (22) than in the first sliding position (Sc1).

6. Motor vehicle according to Claim 5, **characterized in that** the connecting device (28) has a removable clip (44) which acts both on the limb end (26) and on the pivot spindle (22) and holds the tensioning bow (21) in its first sliding position (Sc1) relative to the pivot spindle (22).

7. Motor vehicle according to Claim 2, 3 or 4, **characterized in that** the connecting device (28) has a removable locking element (35) which holds the two limb parts (29, 30) on each other.

8. Motor vehicle according to Claim 3, **characterized in that** the folding spindle (31) lies above the central longitudinal axis (32) of the limbs (29, 30) of the tensioning bow (21).

9. Motor vehicle according to Claim 3 or 8, **characterized in that** - starting from the tensioning bow (21) in the tensioned position (Sp) - the tensioning bow (21) can only be folded about the folding spindle (31) in the direction (arrow 27) of the assembly position and the other, oppositely directed folding direction is blocked.

10. Motor vehicle according to Claim 9, **characterized in that,** below the folding spindle (31) of the limb (21), a blocking stop (33, 34) is formed on each of the limb parts (29, 30), and **in that** the blocking stops (33, 34) lie on each other in the tensioned position (Sp) of the tensioning bow (21).

11. Motor vehicle according to Claim 7, **characterized in that** the locking element (35) has a latch (36) which engages in both limb parts (29, 30) of a limb (24).

12. Motor vehicle according to Claim 11, **characterized in that** the latch is displaceable counter to the force of a spring (37) in one of the limb parts (29, 30) into the release position.

13. Motor vehicle according to Claims 7 and 10, **characterized in that** the locking element (35) is formed by a bracing means (Am), in particular a cable (Sn), which extends between the tensioning bow (21) and the motor vehicle (3), and **in that** the bracing means (Am) pulls the two blocking stops (33, 34) towards each other.

14. Motor vehicle according to Claim 11, **characterized in that** the locking element (35) has, as the latch (36), a plug-in bolt (41) which reaches through the plug-in element receptacle (39) and the plug-in element (40).

## Revendications

1. Véhicule automobile, notamment véhicule léger, comprenant une capote (2) qui peut être transférée d'une position de fermeture couvrant l'habitacle (8) du véhicule automobile dans une position de rangement, et qui présente une tringlerie de capote (18) ainsi qu'un revêtement de capote (14) maintenu en position sur la tringlerie de capote avec une vitre arrière (15) rigide, ladite tringlerie de capote comprenant au moins un étrier de serrage (21) du côté arrière, en forme de U, qui peut être déplacé, dans la position de fermeture de la capote, dans une position de serrage approximativement horizontale et qui peut être déplacé dans une position de montage rabattue vers le haut, par exemple verticale, et qui est supporté à ses extrémités d'étrier libres dans un axe de pivotement (22) s'étendant approximativement parallèlement à l'axe transversal du véhicule, **caractérisé en ce que** chaque branche (24) de l'étrier de serrage (21) en forme de U est connectée à l'axe de pivotement (22) par le biais d'un dispositif de connexion desserrable (28).

2. Véhicule automobile selon la revendication 1,
**caractérisé en ce que** chaque branche (24) de l'étrier de serrage (21) est réalisée en deux parties et les deux parties de branche (29, 30) sont fixées l'une à l'autre de manière desserrable avec le dispositif de connexion (28).

3. Véhicule automobile selon la revendication 1 ou 2, **caractérisé en ce que** le dispositif de connexion (28) présente un axe de rabattement (31) qui s'étend à une distance (Ah, Al) et approximativement parallèlement à l'axe de pivotement (22), et **en ce que** l'étrier de serrage (21) peut être déplacé autour de l'axe de rabattement (31) dans la position de montage.

4. Véhicule automobile selon la revendication 2, **caractérisé en ce que** le dispositif de connexion (28) est réalisé sous forme de raccord enfichable (38) qui présente, sur une partie de branche (29, 30) d'une branche (24), un logement d'élément enfichable (39) et sur l'autre partie de branche (30, 29) de la même branche (24) un élément enfichable (40).

5. Véhicule automobile selon la revendication 1, **caractérisé en ce que** chaque extrémité de branche (26) présente un trou oblong (43) orienté dans la direction de l'axe longitudinal médian (32) de la branche (24), dans lequel l'axe de pivotement (22) vient en prise, **en ce que** l'étrier de serrage (21) est bloqué par le biais du dispositif de connexion (28) dans une première position de coulissement (Sc1) prédéfinie par rapport à l'axe de pivotement (22), laquelle première position de coulissement (Sc1) est associée à la position de serrage (Sp), et **en ce que** l'étrier de serrage (21) peut être déplacé le long du trou oblong (43) dans une deuxième position de coulissement (Sc2) lorsque le dispositif de connexion (28) est desserré, laquelle deuxième position de coulissement (Sc2) est associée à la position de montage et dans laquelle la base (25) de l'étrier de serrage (21) est à une plus grande distance de l'axe de pivotement (22) que dans la première position de coulissement (Sc1).

6. Véhicule automobile selon la revendication 5, **caractérisé en ce que** le dispositif de connexion (28) comprend une pince amovible (44) qui vient en prise à la fois sur l'extrémité de la branche (26) et sur l'axe de pivotement (22), et qui retient l'étrier de serrage (21) dans sa première position de coulissement (Sc1) par rapport à l'axe de pivotement (22).

7. Véhicule automobile selon la revendication 2, 3 ou 4, **caractérisé en ce que** le dispositif de connexion (28) possède un élément de verrouillage amovible (35) qui retient les deux parties de branche (29, 30) l'une contre l'autre.

8. Véhicule automobile selon la revendication 3, **caractérisé en ce que** l'axe de rabattement (31) se situe au-dessus de l'axe longitudinal médian (32) des branches (29, 30) de l'étrier de serrage (21).

9. Véhicule automobile selon la revendication 3 ou 8, **caractérisé en ce que** depuis l'étrier de serrage (21) se trouvant dans la position de serrage (Sp), l'étrier de serrage (21) peut être rabattu autour de l'axe de rabattement (31) uniquement dans la direction de la flèche 27 dans la position de montage et est bloqué dans l'autre direction de rabattement opposée.

10. Véhicule automobile selon la revendication 9, **caractérisé en ce qu'**en dessous de l'axe de rabattement (31) de la branche (21) est réalisée une butée d'arrêt (33, 34) sur chacune des parties de branche (29, 30), et **en ce que** les butées d'arrêt (33, 34) s'appliquent l'une contre l'autre dans la position de serrage (Sp) de l'étrier de serrage (21).

11. Véhicule automobile selon la revendication 7, **caractérisé en ce que** l'élément de verrouillage (35) possède un verrou (36) qui vient en prise dans les deux parties de branche (29, 30) d'une branche (24).

12. Véhicule automobile selon la revendication 11, **caractérisé en ce que** le verrou peut être coulissé à l'encontre de la force d'un ressort (37) dans l'une des parties de branche (29, 30) dans la position de libération.

13. Véhicule automobile selon les revendications 7 et 10, **caractérisé en ce que** l'élément de verrouillage (35) est formé par un moyen de tensionnement (Am), en particulier un câble (Sn), qui s'étend entre l'étrier de serrage (21) et le véhicule automobile (3), et **en ce que** le moyen de tensionnement (Am) tire les deux butées d'arrêt (33, 34) l'une contre l'autre.

14. Véhicule automobile selon la revendication 11, **caractérisé en ce que** l'élément de verrouillage (35) présente, en tant que verrou (36), un boulon d'enfichage (41) qui traverse le logement d'élément enfichable (39) et l'élément enfichable (40).
